# EUROPÄISCHE PATENTSCHRIFT

(11) **EP 3 188 937 B1**
(45) Veröffentlichungstag und Bekanntmachung des Hinweises auf die Patenterteilung: **29.11.2023**
(21) Anmeldenummer: 15759760.0
(22) Anmeldetag: 03.09.2015
(51) Int. Cl.: B60R 25/24

(54) **VERFAHREN ZUR FERNSTEUERUNG WENIGSTENS EINER ERSTEN FUNKTION EINER SICHERHEITSVORRICHTUNG EINES FAHRZEUGES**
METHOD FOR REMOTELY CONTROLLING AT LEAST A FIRST FUNCTION OF A SAFETY DEVICE OF A VEHICLE
PROCÉDÉ DE TÉLÉCOMMANDE D'AU MOINS UNE PREMIÈRE FONCTION D'UN DISPOSITIF DE SÉCURITÉ D'UN VÉHICULE

(30) Priorität: 05.09.2014 DE 102014112849
(43) Veröffentlichungstag der Anmeldung: 12.07.2017
(73) Patentinhaber: Huf Hülsbeck & Fürst GmbH & Co. KG, 42551 Velbert (DE)
(72) Erfinder: GENNERMANN, Sven, 42551 Velbert (DE)
(74) Vertreter: Bals, Rüdiger
(86) Internationale Anmeldenummer: PCT/EP2015/070154
(87) Internationale Veröffentlichungsnummer: WO 2016/034674

(56) Entgegenhaltungen:
- EP-A1- 2 672 739
- EP-A1- 2 763 444
- DE-A1-102012 024 140
- DE-A1-102012 112 808
- US-A1- 2010 075 656

## Beschreibung

Die Erfindung betrifft ein Verfahren zur Fernsteuerung wenigstens einer ersten Funktion einer Sicherheitsvorrichtung eines Fahrzeuges gemäß dem Oberbegriff des Anspruchs 1. Weiterhin betrifft die Erfindung eine Fernsteuervorrichtung gemäß Anspruch 10. Ferner bezieht sich die Erfindung auf ein Fahrzeug gemäß dem Anspruch 12, ein System gemäß dem Anspruch 13 und ein Computerprogrammprodukt gemäß dem Anspruch 15.

Es ist aus dem Stand der Technik bekannt, dass mobile Identifizierungsgeber (ID-Geber) von Bedienern eines Kraftfahrzeuges für eine kontaktlose Authentifizierung bei einer Sicherheitsvorrichtung des Kraftfahrzeuges genutzt werden. Dabei findet vorzugsweise eine bidirektionale Kommunikation zwischen dem ID-Geber und dem Kraftfahrzeug statt, wobei ein Sicherheitscode von dem ID-Geber an das Kraftfahrzeug übertragen und überprüft wird. Stimmt der Sicherheitscode mit einem vordefinierten Code überein, so erfolgt bspw. eine Entriegelung einer Schließvorrichtung des Kraftfahrzeuges. Zur Einleitung der Authentifizierung muss der Bediener üblicherweise aktiv (z. B. durch Knopfdruck) die Übertragung des Sicherheitscodes am ID-Geber auslösen. Hierbei spricht man von einem Active-Keyless-Entry-System. Im Gegensatz dazu ist es bei einer Sicherheitsvorrichtung, welche eine Passive-Keyless-Entry-Funktionalität aufweist, nicht erforderlich, dass der Bediener zur Auslösung einer Funktion des Fahrzeuges eine aktive Handlung an dem ID-Geber vornehmen muss. Die Sicherheitsvorrichtung erkennt dabei eine Annäherung des ID-Gebers und leitet automatisch einen Datenaustausch zur Authentifizierung ein. Bekannterweise findet die Datenübertragung für derartige Keyless-Entry-Systeme über eine Funkverbindung, insbesondere im LF-Frequenzbereich (Low Frequency/Niederfrequenz), unmittelbar zwischen dem ID-Geber und dem Fahrzeug statt.

Nachteilhaft ist dabei, dass lediglich ID-Geber oder solche Geräte zur Authentifizierung verwendet werden können, welche Signale über die Funkverbindung der Sicherheitsvorrichtung des Fahrzeuges, also insbesondere LF-Signale, empfangen und/oder senden können. Zwar führt ein Bediener oft bereits mobile, tragbare Kommunikationsgeräte, wie Mobilfunkgeräte (z. B. "Smartphones" oder "Handys") oder Notebooks bei sich, welche prinzipiell geeignet wären, Sicherheitscodes für eine Authentifizierung zu generieren. Jedoch weisen diese oft nicht die entsprechenden Kommunikationsmittel, wie z. B. einen LF-Sender und -Empfänger auf. Ein Bediener muss also zusätzlich zu seinem mobilen, tragbaren Kommunikationsgerät einen geeigneten ID-Geber mitführen, um einen Authentifizierungsvorgang bei der Sicherheitsvorrichtung des Fahrzeuges durchzuführen. Der ID-Geber benötigt ferner zusätzlichen Platz, weist teure und aufwändige Elektronik für entsprechende Kommunikationsschnittstellen auf und beeinträchtigt bei Verlust die Sicherheit durch einen möglichen unbefugten Gebrauch. Weiterhin muss eine regelmäßige, zyklische Abfrage zur Detektion des ID-Gebers durch die Sicherheitsvorrichtung des Fahrzeuges erfolgen, z. B. durch die Aussendung eines Wecksignals. Hierzu ist ein entsprechend hoher Energieverbrauch der Fahrzeugelektronik notwendig, wodurch es ggf. zur Entladung der Fahrzeugbatterie kommt. Die US 2010 075 656 A zeigt ein gattungsgemäßes Verfahren gemäß dem Oberbegriff von Anspruch 1.

Es ist daher eine Aufgabe der vorliegenden Erfindung, die voranstehend beschriebenen Nachteile zumindest teilweise zu beheben. Insbesondere ist es Aufgabe der vorliegenden Erfindung, eine kostengünstige, sichere und zuverlässige Nutzung mobiler, tragbarer Kommunikationsgeräte, insbesondere Mobilfunkgeräte, zur Fernsteuerung wenigstens einer ersten Funktion einer Sicherheitsvorrichtung eines Fahrzeuges zu ermöglichen. Somit kann insbesondere auf einen separaten ID-Geber verzichtet werden, hierdurch Kosten und Energie gespart, die Sicherheit erhöht und die Funktionalität des Keyless-Entry-Systems erweitert werden.

Die voranstehende Aufgabe wird gelöst durch ein Verfahren mit den Merkmalen des Anspruchs 1, eine Fernsteuervorrichtung mit den Merkmalen des Anspruchs 10, ein Fahrzeug mit den Merkmalen des Anspruchs 12, ein System mit den Merkmalen des Anspruchs 13 sowie ein Computerprogrammprodukt mit den Merkmalen des Anspruchs 15. Dabei gelten Merkmale und Details, die im Zusammenhang mit dem erfindungsgemäßen Verfahren beschrieben sind, selbstverständlich auch im Zusammenhang mit der erfindungsgemäßen Fernsteuervorrichtung, dem erfindungsgemäßen System, dem Fahrzeug sowie dem erfindungsgemäßen Computerprogrammprodukt, und jeweils umgekehrt, so dass bezüglich der Offenbarung zu den einzelnen Erfindungsaspekten stets wechselseitig Bezug genommen wird bzw. werden kann. Das erfindungsgemäße Verfahren dient der insbesondere kontaktlosen Fernsteuerung wenigstens einer ersten Funktion einer Sicherheitsvorrichtung eines Fahrzeuges, und insbesondere eines Kraftfahrzeuges. Die Sicherheitsvorrichtung kann dabei z. B. eine Keyless-Entry-, eine Passive- oder Active-Keyless-Entry- und/oder eine Keyless-Go-Funktionalität aufweisen. Dabei ist eine Fernsteuervorrichtung vorgesehen, welche bspw. als GPS-Positionsempfänger, mobiles, tragbares Kommunikationsgerät, Mobilfunkgerät, Smartphone, Handy, Tablet-Computer und/oder tragbarer Computer (Notebook) oder dergleichen ausgebildet sein kann. Die Fernsteuervorrichtung weist dabei eine erste Funkeinheit auf, wodurch eine Verbindung mit einem Mobilfunknetz betreibbar ist. Erfindungsgemäß werden dabei die nachfolgenden Schritte durchgeführt:
a) Bestimmung der Position des Fahrzeuges, insbesondere der geographischen Position, welche z. B. direkt durch Nutzung eines GPS-Systems (Global Positioning System) oder indirekt durch eine Mobilfunk-Ortung, insbesondere durch Zellenbestimmung, bestimmt wird.
b) Bestimmung der Position der Fernsteuervorrichtung, insbesondere direkt durch Nutzung eines GPS-Systems oder indirekt durch Mobilfunk-Ortung.
c) Bestimmung einer Ist-Entfernung zwischen der Position des Fahrzeuges und der Fernsteuervorrichtung.
d) Vergleich der Ist-Entfernung mit zumindest einer definierten Soll-Entfernung, wobei die erste Funktion aktiviert wird, falls die Ist-Entfernung kleiner oder gleich der Soll-Entfernung ist.

Der Begriff "definiert" bedeutet dabei im Zusammenhang mit der Soll-Entfernung, dass die Soll-Entfernung bspw. auf einem Speicher und/oder computerlesbaren Speichermedium z. B. des Fahrzeuges gespeichert sein kann. Ferner können insbesondere die Schritte a) und b) in beliebiger Reihenfolge durchgeführt werden, d. h. es kann auch zunächst die Position der Fernsteuervorrichtung gemäß Schritt b) und erst dann die Position des Fahrzeuges gemäß Schritt a) bestimmt werden. Schritt c) setzt insbesondere voraus, dass die Positionen des Fahrzeuges und der Fernsteuervorrichtung zur Bestimmung der Ist-Entfernung bereits vorliegen. Schritt d) setzt insbesondere voraus, dass die Ist-Entfernung zuvor bestimmt wurde. Auf diese Weise kann sehr zuverlässig eine Ortung der Fernsteuervorrichtung durch das Fahrzeug erfolgen, und hierdurch z. B. die Fernsteuervorrichtung zusätzlich zu ihrer originären Funktionalität (z. B. die eines Mobilfunkgerätes zur Mobilfunkkommunikation) eine ID-Geber-Funktionalität erhalten. Die Ortung mittels eines GPS-Systems und der Mobilfunk-Ortung kann dabei z. B. auch kombiniert zur Verbesserung der Genauigkeit eingesetzt werden. Die Mobilfunk-Ortung kann dabei z. B. auch eine Netzbestimmung umfassen, wobei die verfügbaren Funkzellen, die Entfernung der Funkantennen, die Art und/oder Anbieter der empfangbaren Funkzellen bzw. Funknetze und/oder dergleichen zur Ortung herangezogen werden können.

Vorzugsweise erfolgt dabei die Bestimmung der Ist-Entfernung durch eine Auswertevorrichtung (z. B. eine Fahrzeugelektronik) des Fahrzeuges, eine Auswerteeinheit der Fernsteuervorrichtung und/oder durch einen Vermittlungsdienst, wie z. B. einen Internetserver. Die Ist-Entfernung kann dabei bspw. dadurch berechnet werden, dass die bestimmten Positionen des Fahrzeuges und/oder der Fernsteuervorrichtung mit vordefinierten bzw. vorgespeicherten Koordinaten und/oder geographischen Karten abgeglichen werden. Hierbei können z. B. auch internetgestützte kartographische bzw. Geo-Dienste, Ortungsdienste und/oder Karten- bzw. Geodatenbanken zum Einsatz kommen. Ebenfalls ist es denkbar, dass die Bestimmung der Position des Fahrzeuges, der Position der Fernsteuervorrichtung und/oder die Bestimmung der Ist-Entfernung vollständig und/oder zumindest teilweise durch das Navigationssystem des Fahrzeuges erfolgt. Ferner kann die Ist-Entfernung bspw. auch dadurch bestimmt werden, dass direkt oder indirekt die Signalstärke einer Verbindung des Fahrzeuges zu der Fernsteuervorrichtung ausgewertet wird (insbesondere nur dann, wenn sich die Fernsteuervorrichtung in der Nähe des Fahrzeuges befindet). Hierdurch wird der Vorteil erzielt, dass eine Annäherung eines Bedieners der Fernsteuervorrichtung detektiert werden kann. Erst ab einer vordefinierten Entfernung (der Soll-Entfernung) wird dabei eine erste Funktion des Fahrzeuges aktiviert. Somit kann eine Authentifizierung mit der Sicherheitsvorrichtung des Fahrzeuges erfolgen, ohne dass der Bediener einen separaten ID-Geber benötigt. Durch die bzw. aufgrund der Authentifizierung mit der Sicherheitsvorrichtung kann bspw. ein Entriegeln der Schließvorrichtung des Fahrzeuges erfolgen. Weiter können bei Detektion der Annäherung, d. h. falls die Ist-Entfernung kleiner oder gleich der Soll-Entfernung ist, weitere Funktionen des Fahrzeuges aktiviert werden. Dies kann bspw. das Einschalten der Vorfeldbeleuchtung sein, wenn sich der Bediener mit der Fernsteuervorrichtung bereits auf wenige Meter angenähert hat. Hierdurch kann der Komfort und die Sicherheit bei der Nutzung des Fahrzeuges verbessert werden.

Besonders vorteilhaft ist es, dass der nachfolgende Schritt als erste Funktion durchgeführt wird:
e) kontaktlose Authentifizierung der Fernsteuervorrichtung insbesondere über das Mobilfunknetz und/oder eine Bluetooth-Verbindung bei der Sicherheitsvorrichtung des Fahrzeuges.

Der Begriff "kontaktlos" bezieht sich darauf, dass weder eine drahtgebundene elektrische Verbindung zur Authentifizierung noch eine mechanische Authentifizierung (z. B. durch einen mechanischen Schlüssel) bei der Sicherheitsvorrichtung notwendig ist. Weiter kann die kontaktlose Authentifizierung z. B. über eine Verbindung nach dem Bluetooth-Standard und/oder nach dem NFC-Standard erfolgen. Es kann ferner eine Erweiterung des Bluetooth-Standards, wie bspw. Bluetooth-Low-Power bzw. Bluetooth-Low-Energy genutzt werden. Dabei kommt z. B. ein Protokollstapel zum Einsatz, welcher geeignet ist, eine Kommunikation von Bluetooth-Geräten z. B. innerhalb einer maximalen Reichweite von 10 Metern mit einem deutlich verringerten Energieverbrauch der Bluetooth-Geräte zu ermöglichen. Aufgrund der geringeren Reichweite kann zudem die Sicherheit erhöht werden, da eine Authentifizierung lediglich in unmittelbarer Nähe zum Fahrzeug möglich ist. Eine unbemerkte, versehentliche Freigabe der Sicherheitsvorrichtung wird damit vermieden. Von weiterem Vorteil ist daher auch die Nutzung einer NFC-Verbindung (Near Field Communication), welche eine maximale Reichweite von nur wenigen Zentimetern (z. B. unter 5 cm, 10 cm und/oder 15 cm) aufweist. Ebenfalls kann es möglich sein, dass zur Authentifizierung auch eine LF-(Low Frequency) und/oder HF-(High Frequency) und/oder WLAN-(Wireless Local Area Network) Verbindung zum Einsatz kommt. Die Authentifizierung erfolgt dabei insbesondere über eine bidirektionale Funk- und/oder Datenverbindung, insbesondere direkt und/oder indirekt zwischen dem Fahrzeug und der Fernsteuervorrichtung. Eine direkte Verbindung ist dabei eine insbesondere ausschließlich zwischen zwei Geräten, z. B. dem Fahrzeug und der Fernsteuervorrichtung, betriebene Verbindung. Eine indirekte Verbindung liegt z. B. dann vor, wenn das Mobilfunknetz, wie bspw. ein GSM- (Global System for Mobile Communication) Netz, ein UMTS- (Universal Mobile Telecommunication System) Netz, ein GPRS- (General Packet Radio Service) und/oder ein LTE- (Long Term Evolution) Mobilfunknetz benutzt wird, da hierbei weitere Vermittlungsstationen zum Einsatz kommen müssen. Ebenfalls ist es möglich, dass die zuvor beschriebenen Verbindungstechnologien kombiniert zur kontaktlosen Authentifizierung zum Einsatz kommen, um z. B. die Ausfallsicherheit zu erhöhen. Da die kontaktlose Authentifizierung als erste Funktion durchgeführt wird, falls die Ist-Entfernung kleiner oder gleich der Soll-Entfernung ist, ist somit eine sehr komfortable Fernsteuerung der Sicherheitsvorrichtung ohne Notwendigkeit einer aktiven Bedienung der Fernsteuervorrichtung durch einen Bediener möglich.

Gemäß einem weiteren Vorteil kann vorgesehen sein, dass bei Schritt e) ein Sicherheitscode zwischen der Fernsteuervorrichtung und der Sicherheitsvorrichtung des Fahrzeuges ausgetauscht wird, wobei insbesondere der Sicherheitscode ein IMEI-Code der Fernsteuervorrichtung, einen generierten Code und/oder einen definierten Code insbesondere zur eindeutigen Identifizierung der Fernsteuervorrichtung aufweisen kann. Die IMEI (International Mobile Station Equipment Identity) ist hierbei eine eindeutige 15-stellige Seriennummer eines Mobilfunkgeräts (wie einem Handy oder Smartphone), welche zur eindeutigen Identifizierung des Mobilfunkgeräts genutzt werden kann. Da die IMEI eines Mobilfunkgeräts ausgelesen und/oder verändert werden kann, kann es zudem sinnvoll sein, dass neben dem IMEI-Code z. B. zusätzlich und/oder kombiniert noch weitere Sicherheitscodes zur Authentifizierung bei der Sicherheitsvorrichtung des Fahrzeuges verwendet werden. Dies kann bspw. ein generierter Sicherheitscode sein, welcher z. B. durch eine Software bzw. App der Fernsteuervorrichtung bzw. durch eine Auswerteeinheit der Fernsteuervorrichtung berechnet wird. Auch kann es möglich sein, dass der Sicherheitscode bzw. eine Liste von Sicherheitscodes in einer Speichereinheit der Fernsteuervorrichtung durch die Auswerteeinheit auslesbar und insbesondere verschlüsselt gespeichert und dadurch vordefiniert ist. Diese Codes können dann z. B. nach einem vorbestimmten Schema durch die Auswerteeinheit ausgelesen und/oder verschlüsselt und dann zur Authentifizierung von der Fernsteuervorrichtung an das Fahrzeug bzw. die Sicherheitsvorrichtung des Fahrzeuges übertragen werden. Hierbei kommt vorzugsweise eine nicht flüchtige Speichereinheit der Fernsteuervorrichtung zum Einsatz, welche z. B. neben den Sicherheitscodes auch ein erfindungsgemäßes Computerprogrammprodukt umfasst. Das Computerprogrammprodukt kann dabei bspw. auch zur Generierung der Sicherheitscodes dienen. Somit wird eine sichere und zuverlässige Authentifizierung durch die Fernsteuervorrichtung ermöglicht, ohne dass ein separater ID-Geber notwendig ist.

Vorteilhafterweise kann im Rahmen der Erfindung vorgesehen sein, dass nach einer erfolgreichen Authentifizierung ein Zugang zum Fahrzeug durch die Sicherheitsvorrichtung freigegeben wird. Durch die Aktivierung der ersten Funktion wird dabei bspw. nach einer erfolgreichen Authentifizierung eine Schließvorrichtung des Fahrzeuges entriegelt. Hierdurch ist es möglich, dass ein Bediener, welcher sich mit der Fernsteuervorrichtung dem Fahrzeug nähert, ohne eine aktive Bedienung der Fernsteuervorrichtung (d. h. ohne Betätigung einer Eingabevorrichtung der Fernsteuervorrichtung, wie bspw. eines Touch-Displays) und auch ohne Bedienung eines separaten ID-Gebers die Türen des zuvor verschlossenen Fahrzeuges öffnen und einsteigen und es ggf. auch (z. B. über einen Start-Stopp-Taster im Fahrzeuginneren) starten kann. Die dazu notwendige Authentifizierung findet dabei kontaktlos im Hintergrund statt, insbesondere ohne dass ein aktives Eingreifen des Bedieners erforderlich ist. Dabei wird durch eine derartige Authentifizierung zuverlässig verhindert, dass ein unberechtigter Bediener Zugang zum Fahrzeug erhält, und gleichzeitig der Komfort maßgeblich erhöht.

Gemäß einem weiteren Vorteil ist es denkbar, dass der Schritt a) und/oder b) und/oder c) und/oder d) durch das Fahrzeug, insbesondere eine Fahrzeugelektronik, durchgeführt wird, wobei insbesondere zur Bestimmung der Ist-Entfernung die Position der Fernsteuervorrichtung durch eine Kommunikationsvorrichtung des Fahrzeuges empfangen wird. Für eine Detektion einer Annäherung des Bedieners mit der Fernsteuervorrichtung, d. h. zur Bestimmung der Ist-Entfernung, ist es notwendig, die Position der Fernsteuervorrichtung und des Fahrzeuges zu ermitteln. Es ist dabei denkbar, dass die Bestimmung der Ist-Entfernung anhand der Position der Fernsteuervorrichtung sowie der Position des Fahrzeuges (z. B. ausschließlich) durch das Fahrzeug, durch die Fernsteuervorrichtung, insbesondere eine Auswerteeinheit der Fernsteuervorrichtung und/oder durch ein weiteres Gerät, wie z. B. einen Vermittlungsdienst, erfolgt. Damit das Fahrzeug die Ist-Entfernung bestimmen kann, muss es somit die Position der Fernsteuervorrichtung und die Position des Fahrzeuges ermitteln. Letzte kann es direkt selbst, z. B. über das Navigationssystem und/oder ein GPS-Gerät, bestimmen. Dagegen muss zur Bestimmung der Position der Fernsteuervorrichtung eine Verbindung des Fahrzeuges mit der Fernsteuervorrichtung hergestellt werden. In näherer Entfernung der Fernsteuervorrichtung zu dem Fahrzeug kann es dabei möglich sein, dass die Ist-Entfernung und/oder die Position der Fernsteuervorrichtung z. B. durch eine direkte Verbindung, bspw. durch Auswertung der Signalstärke einer Funk, WLAN, Bluetooth und/oder NFC-Verbindung, bestimmt werden. Jedoch kann die Entfernung der Fernsteuervorrichtung zu dem Fahrzeug auch z. B. im Bereich mehrerer Kilometer liegen. Da unter diesen Umständen bestimmte Verbindungen, wie bspw. direkte Funkverbindungen, WLAN, Bluetooth und/oder NFC, nicht möglich sind, wird zur Übertragung der Positionsdaten der Fernsteuervorrichtung an das Fahrzeug z. B. eine Mobilfunkverbindung und/oder eine Netzwerk- bzw. Internet-Verbindung genutzt. Zum Empfang dieser Daten sowie zum Aufbau der Verbindung muss das Fahrzeug daher eine Kommunikationsvorrichtung aufweisen, welche zum Betreiben dieser Verbindung geeignet ist. Die Kommunikationsvorrichtung kann dabei z. B. eine Funkeinheit zum Betreiben einer Verbindung mit einem Mobilfunknetz, wie z. B. ein GSM-Gerät, und/oder ein Gerät zur Herstellung einer Netzwerk- und/oder Internet-Verbindung sein. Der Begriff Internet kann sich dabei auf einen öffentlichen, weltweiten Verbund von Netzwerken und/oder Endgeräten oder auch auf ein privates und/oder teilweise öffentliches Netzwerk beziehen. Entscheidend ist dabei, dass eine Datenkommunikation über weite Distanzen und ggf. mehrere Vermittlungsstationen stattfindet. Hierbei ist es denkbar, dass die Position (d. h. z. B. die Positionsdaten und/oder geographischen Koordinaten) der Fernsteuervorrichtung zyklisch (d. h. zeitlich periodisch) an die Kommunikationsvorrichtung des Fahrzeuges, z. B. auch indirekt über einen Vermittlungsdienst, übertragen werden. Die zeitlichen Abstände der zyklischen Übertragung können z. B. durch einen Zeitgeber der Fernsteuervorrichtung, ein Computerprogrammprodukt der Fernsteuervorrichtung und/oder durch übertragende Parameter des Vermittlungsdienstes bzw. des Fahrzeuges, welche über die Verbindung von der Fernsteuervorrichtung empfangen werden, bestimmt werden. Die Verbindung, d. h. insbesondere die Datenverbindung, kann dazu eine bidirektionale Übertragung von Daten ermöglichen. Hierdurch kann der Vorteil erzielt werden, dass zur Berechnung der Ist-Entfernung regelmäßig ein aktueller Standort der Fernsteuervorrichtung verfügbar ist.

Es ist ferner denkbar, dass eine erste Soll-Entfernung und zumindest eine zweite Soll-Entfernung definiert sind, wobei bei Schritt d) eine erste Funktion aktiviert wird, falls die Ist-Entfernung kleiner und/oder gleich der ersten Soll-Entfernung ist, und zumindest eine zweite Funktion aktiviert wird, falls die Ist-Entfernung kleiner und/oder gleich der zweiten Soll-Entfernung ist. Neben einer zweiten Soll-Entfernung können auch weitere Soll-Entfernungen (z. B. eine dritte, vierte und/oder fünfte Soll-Entfernung) definiert sein, welche entsprechend dritten, vierten, fünften und/oder weiteren Funktionen des Fahrzeuges zugeordnet sind. Unterschiedliche Ist-Entfernungen werden damit unterschiedlichen Funktionen des Fahrzeuges zugeordnet, wobei eine Annäherung der Fernsteuervorrichtung bzw. des Bedieners mit der Fernsteuervorrichtung eine stufenweise Aktivierung dieser Funktionen (der Sicherheitsvorrichtung) des Fahrzeuges bewirkt. Da die zweite Soll-Entfernung bspw. größer als die erste Soll-Entfernung sein kann, wird bei einer Annäherung somit zunächst die zweite Soll-Entfernung erreicht und damit zunächst die zweite Funktion aktiviert, bevor die erste Funktion bei einer weiteren Annäherung aktiviert wird. Somit könnten z. B. als erste Stufe bei einer Erreichung der zweiten Soll-Entfernung durch die Fernsteuervorrichtung die elektrischen Systeme des Fahrzeuges bereits hochgefahren werden. Erst bei einer weiteren Annäherung (als der zweiten Stufe), d. h. wenn die Ist-Entfernung kleiner oder gleich der ersten Soll-Entfernung ist, findet die Authentifizierung und ggf. die Freigabe der Schließvorrichtung statt. Umgekehrt könnte z. B. bei dem Austreten aus dem Bereich der ersten Soll-Entfernung eine weitere Funktion aktiviert und/oder eine erste Funktion wieder deaktiviert werden, falls die Ist-Entfernung größer als die erste Soll-Entfernung ist. Durch die Deaktivierung der ersten Funktion könnte bspw. die Schließvorrichtung des Fahrzeuges wieder gesperrt und der Zugang zum Fahrzeug durch die Sicherheitsvorrichtung verhindert werden. Ebenfalls ist es möglich, dass auch weitere Funktionen vorgesehen sind, falls die Ist-Entfernung größer der zweiten und/oder dritten und/oder vierten und/oder weiteren Soll-Entfernungen ist. So können z. B. bei einem Entfernen außerhalb der zweiten Soll-Entfernung die elektrischen Systeme des Fahrzeuges wieder heruntergefahren werden und z. B. bei einer Entfernung der Fernsteuervorrichtung außerhalb einer dritten Soll-Entfernung das zeitliche Intervall zur Durchführung der Schritte b) und/oder c) und/oder e) erhöht werden (z. B. um den Energieverbrauch zu reduzieren). Durch diese stufenweise, entfernungsabhängige Aktivierung und/oder Deaktivierung von Funktionen (der Sicherheitsvorrichtung) des Fahrzeuges kann gleichzeitig ein hoher Komfort und ein energiesparender Betrieb gewährleistet werden.

In einer weiteren Möglichkeit kann vorgesehen sein, dass Schritt a) bei jedem Stillstand des Fahrzeuges durchgeführt wird. Da während einer Fahrt des Fahrzeuges eine Detektion der Annäherung des Bedieners und/oder der Fernsteuervorrichtung üblicherweise nicht notwendig ist, kann vorgesehen sein, dass das erfindungsgemäße Verfahren z. B. ausschließlich bei einem Stillstand des Fahrzeuges durchgeführt wird. Auf diese Weise wird ebenfalls ein energiesparender Betrieb ermöglicht. Ebenfalls ist es denkbar, dass ein Starten des Fahrzeuges z. B. nur bei einer Ist-Entfernung von im Wesentlichen 0 m durchführbar ist, da in diesem Fall sich der Bediener innerhalb des Fahrzeuges befindet. Das Starten des Fahrzeuges kann also als eine weitere aktivierbare Funktion einer weiteren, festgelegten Soll-Entfernung von im Wesentlichen 0 - 0.5 m zugeordnet sein.

Ferner ist es denkbar, dass Schritt a) und/oder b) und/oder c) und/oder d) und/oder e) in Abhängigkeit der Ist-Entfernung zeitabhängig, insbesondere zyklisch, durchgeführt wird. Es kann somit vorgesehen sein, dass die Bestimmung der Position der Fernsteuervorrichtung gemäß Schritt b), z. B. durch einen Empfang der Position bzw. Positionsdaten des Fahrzeuges durch eine Kommunikationsvorrichtung des Fahrzeuges, eine Bestimmung der Position des Fahrzeuges gemäß Schritt a), eine Bestimmung der Ist-Entfernung z. B. durch eine Auswertevorrichtung des Fahrzeuges gemäß Schritt c) und/oder ein Vergleich der Ist-Entfernung mit zumindest einer definierten Soll-Entfernung zyklisch wiederholt in bestimmten Zeitintervallen erfolgt. Die Schritte a) und/oder b) und/oder c) und/oder d) und/oder e) können dabei z. B. zeitlich nacheinander durchgeführt werden. Dabei kann es möglich sein, dass die Zeitintervalle proportional zur Ist-Entfernung sind. Eine größere Differenz zwischen der Ist- und der Soll-Entfernung bewirkt dabei z. B. ein größeres Zeitintervall, da nicht damit zu rechnen ist, dass eine baldige Annäherung des Bedieners bzw. der Fernsteuervorrichtung erfolgt. Das Zeitintervall zur Bestimmung der Position der Fernsteuervorrichtung kann dabei bspw. auch durch eine Auswertevorrichtung des Fahrzeuges bestimmt und über eine Datenverbindung an die Fernsteuervorrichtung übertragen werden. Die Häufigkeit zur Bestimmung der Position der Fernsteuervorrichtung wird dann von der Fernsteuervorrichtung an dieses Zeitintervall angepasst. Hierdurch wird der Vorteil erzielt, dass ein energiesparender Betrieb sowohl des Fahrzeuges als auch der Fernsteuervorrichtung erzielt werden kann.

Die Schritte b), c), d) und e) werden in Abhängigkeit eines situationsabhängigen Zustandsparameters der Fernsteuervorrichtung zeitabhängig zyklisch durchgeführt. Die Schritte a) und/oder b) und/oder c) und/oder d) und/oder e) können dabei z. B. zeitlich nacheinander durchgeführt werden. Dieser Zustandsparameter wird durch die Fernsteuervorrichtung und/oder durch das Fahrzeug anhand der gemessenen und berechneten Eingabedaten für aktuelle Situationen der Fernsteuervorrichtung ermittelt. Diese Eingabedaten können z. B. Positionsdaten, die Ist-Entfernung, die Tageszeit und/oder das Datum, Kalendereinträge der Fernsteuervorrichtung, die Bewegungsart (z. B. eine schnelle und oder eine langsame Bewegung) und/oder die Bewegungsrichtung (d. h. Himmelsrichtung) der Fernsteuervorrichtung sein. Diese Eingabedaten werden, z. B. durch die Auswerteeinheit der Fernsteuervorrichtung, der Auswertevorrichtung des Fahrzeuges und/oder durch einen internetgestützten Vermittlungsdienst, miteinander in Beziehung gesetzt und hierdurch der Zustandsparameter ermittelt. Dies führt dazu, dass intelligent die jeweilige Situation des Bedieners anhand des Zustands der Fernsteuervorrichtung ermittelt werden kann und hierdurch eine (numerisch ermittelbare) Vorhersage möglich ist, wann die Bedingung eintritt, dass die Ist-Entfernung kleiner oder gleich einer Soll-Entfernung ist. Befindet sich die Fernsteuervorrichtung bspw. einige Kilometer entfernt von dem Fahrzeug und/oder entfernt sich schnell oder langsam von dem Fahrzeug, kann das Zeitintervall, z. B. zur Bestimmung der Ist-Entfernung, vergrößert und dadurch Energie gespart werden. Ebenfalls können Funktionen des Fahrzeuges, z. B. abhängig von der Tageszeit oder Kalendereinträge, welche der Bediener auf der Fernsteuervorrichtung gespeichert hat, aktiviert und/oder deaktiviert werden. Auch ist es möglich, dass weitere Informationen, welche bspw. von einem Vermittlungsdienst über das Internet und/oder über die Fernsteuervorrichtung übertragen werden, zur Bestimmung des Zustandsparameters und/oder zur Aktivierung und/oder Deaktivierung von Funktionen des Fahrzeuges miteinander in Beziehung gesetzt und ausgewertet werden. Dies hat den Vorteil, dass bspw. bei niedrigen Außentemperaturen Funktionen des Fahrzeuges zur Enteisung aktiviert werden, wenn eine Annäherung des Bedieners (d. h. der Fernsteuervorrichtung) erkannt und/oder vorhergesagt werden. Zur Aktivierung und/oder zur Deaktivierung von Funktionen des Fahrzeuges kann es also genügen, dass das Eintreten der Bedingung, dass die Ist-Entfernung kleiner oder gleich einer Soll-Entfernung ist, vorhergesagt wird (d. h. und nicht etwa tatsächlich eintritt). Auch kann z. B. bei einer bestimmten Ist-Entfernung, bestimmten Kalendereinträgen oder Bedienervorgaben, welche auf der Fernsteuervorrichtung gespeichert sind, (z. B. einem Urlaubszeitraum, Tageszeit, usw.), eine Funktion, wie z. B. der Alarmanlage des Fahrzeuges, aktiviert werden. Es wird hierdurch ein sehr hoher Komfort sowie Sicherheit bei der Bedienung des Fahrzeuges erzielt.

Es ist ferner denkbar, dass die Fernsteuervorrichtung und/oder das Fahrzeug ihre Positionsdaten kontaktlos empfangen, wobei insbesondere die Positionsdaten von einem Navigationssystem (insbesondere GPS-System), einem Mobilfunknetz durch Ermittlung der Mobilfunkzellen und/oder einem (festinstallierten und/oder ortsgebunden) Netzwerk kommen. Die Fernsteuervorrichtung und/oder das Fahrzeug können dazu z. B. einen Positionsempfänger, wie z. B. ein GPS-Gerät zur Verbindung mit einem GPS-System, aufweisen. Ebenfalls ist es denkbar, dass die Positionsdaten dadurch ermittelt werden, dass Umgebungsnetzwerke, wie z. B. festinstallierte und/oder ortsgebundene WLAN- und/oder Bluetooth-Netzwerke in der Umgebung der Fernsteuervorrichtung und/oder des Fahrzeuges ausgewertet werden. Ferner kann es möglich sein, dass zur Erhöhung der Genauigkeit auch eine Kombination der beschriebenen Möglichkeiten zur Ermittlung der Positionsdaten verwendet wird.

In einer weiteren Möglichkeit kann im Rahmen der Erfindung vorgesehen sein, dass das Mobilfunknetz nach einem GSM, GPRS, UMTS und/oder LTE Standard ausgebildet ist, und insbesondere eine Datenverbindung zu einem Internet und/oder einem Vermittlungsdienst (z. B. über das Internet) und/oder zu dem Fahrzeug aufweist. Neben GPRS (General Packet Radio Service), UMTS (Universal Mobile Telecommunication System) und/oder LTE (Long Term Evolution) sind selbstverständlich auch noch weitere Technologien zur Herstellung einer Daten- und/oder Internetverbindung für das Mobilfunknetz einsetzbar. Werden bspw. die Daten zur Authentifizierung und/oder zur Bestimmung der Positionen der Fernsteuervorrichtung über eine Netzwerk-, Daten- und/oder Internetverbindung übertragen, so kann diese Verbindung direkt zwischen dem Fahrzeug und der Fernsteuervorrichtung oder indirekt z. B. über das Internet mit Verbindung zu einem Vermittlungsdienst erfolgen. Dieser Vermittlungsdienst kann dabei z. B. ein Datenvermittlungsdienst, wie ein Server, sein, welcher die Daten empfängt, auswertet und weiterleitet. Es kann somit vorgesehen sein, dass die Fernsteuervorrichtung und/oder das Fahrzeug lediglich ihre Position an den Vermittlungsdienst übertragen, und dieser die Bestimmung der Ist-Entfernung anhand der empfangenen Positionsdaten vornimmt. Anschließend kann bspw. der Vermittlungsdienst das Ergebnis, d. h. die Ist-Entfernung und/oder das Eintreten der Bedingung, dass die Ist-Entfernung kleiner oder gleich der Soll-Entfernung ist, an das Fahrzeug und/oder die Fernsteuervorrichtung übertragen. Somit können z. B. Kosten und Energie reduziert werden, da der Vermittlungsdienst z. B. nur dann eine Datenverbindung z. B. über das Mobilfunknetz mit dem Fahrzeug aufbaut, wenn z. B. eine erste Funktion aktiviert und/oder deaktiviert werden soll.

Vorteilhafterweise kann im Rahmen der Erfindung vorgesehen sein, dass die Fernsteuervorrichtung und/oder das Fahrzeug eine zweite Funkeinheit zum Empfang Ihrer Positionsdaten und/oder zur Authentifizierung aufweist, wobei durch die zweite Funkeinheit insbesondere eine Verbindung mit einem GPS-, WLAN-, Mobilfunk-, und/oder Bluetooth-Netz betreibbar ist. Es kann daher möglich sein, dass z. B. ausschließlich eine erste Funkeinheit des Fahrzeuges und/oder der Fernsteuervorrichtung sowohl zur Verbindung mit dem Mobilfunknetz als auch zum Empfang der Positionsdaten vorgesehen ist, oder dass z. B. ausschließlich zum Empfang der Positionsdaten eine weitere, zweite Funkeinheit vorgesehen ist. Die zweite Funkeinheit kann dabei z. B. ausschließlich zum Empfang von Daten bzw. Funksignalen, d. h. für eine unidirektionale Verbindung, geeignet sein. Dies ist bspw. der Fall, wenn die zweite Funkeinheit zur Positionsbestimmung mittels einem GPS (Global Positioning System) genutzt wird. Ferner ist es denkbar, dass die erste Funkeinheit, die zweite Funkeinheit und/oder eine dritte Funkeinheit zur Authentifizierung bei Schritt e) durch das Fahrzeug und/oder die Fernsteuervorrichtung genutzt wird, wobei durch die zweite und/oder dritte Funkeinheit z. B. eine Verbindung mit einem GPS-, WLAN-, Mobilfunk- und/oder Bluetooth und/oder Bluetooth-Low-Power-Netz betreibbar ist. Auf diese Weise kann zuverlässige Datenübertragung z. B. zur Authentifizierung gemäß Schritt e) und/oder Positionsbestimmung möglich sein.

Vorteilhafterweise kann im Rahmen der Erfindung vorgesehen sein, dass das Fahrzeug eine Kommunikationsvorrichtung aufweist, wodurch eine Datenverbindung mit der Fernsteuervorrichtung betreibbar ist. Die Datenverbindung zwischen dem Fahrzeug und der Fernsteuervorrichtung kann dabei z. B. "unmittelbar" durch die Mobilfunkverbindung (über einen Datenübertragungsdienst wie GPRS oder dergleichen) oder Bluetooth oder mittelbar, z. B. über eine Internetverbindung, bei einem Server bzw. einem Vermittlungsdienst, erfolgen. Der Unterschied zur unmittelbaren Verbindung ist darin zu sehen, dass bei der mittelbaren Verbindung keine direkte Anwahl oder eine Authentifizierung (Pairing) zwischen der Fernsteuervorrichtung und dem Fahrzeug zwingend notwendig ist, und lediglich die direkte Verbindung jeder Seite mit bspw. einem Server hergestellt werden muss. So können z. B. Authentifizierungsinformationen an zentraler Stelle verwaltet und die Verbindung zentral gesteuert werden. Die Kommunikationsvorrichtung dient ferner z. B. insbesondere ausschließlich zum Empfang der bestimmten Position der Fernsteuervorrichtung. Dazu kann die Kommunikationsvorrichtung eine Mobilfunk-Sende-Empfangseinheit aufweisen, welche eine Datenverbindung z. B. über ein Internet herstellt. Ebenfalls ist es denkbar, dass das Fahrzeug seine Position über die Datenverbindung an die Fernsteuervorrichtung überträgt, wobei die Fernsteuervorrichtung z. B. mittels einer Auswerteeinheit anhand der Position des Fahrzeuges und der eigenen Position die Ist-Entfernung berechnen kann. Dies hat den Vorteil, dass stets sowohl das Fahrzeug die Position der Fernsteuervorrichtung als auch die Fernsteuervorrichtung die Position des Fahrzeuges kennt.

Vorteilhafterweise kann im Rahmen der Erfindung vorgesehen sein, dass eine Kommunikationsvorrichtung des Fahrzeuges zum Betrieben einer Datenverbindung mit der Fernsteuervorrichtung vorgesehen ist, wobei insbesondere bei einem Unfall des Fahrzeuges ein Notsignal über die Kommunikationsvorrichtung ausgesendet wird. Das Fahrzeug kann dazu bspw. einen Crash-Sensor aufweisen, wodurch ein eingetretener und/oder drohender Unfall erkannt werden kann. Hierzu können bspw. auch Beschleunigungssensoren und/oder Radarvorrichtungen des Fahrzeuges eingesetzt werden. Wird ein Unfall bzw. Notfall erkannt, so kann über die Kommunikationsvorrichtung des Fahrzeuges ein Notsignal ggf. mit der bestimmten Position des Fahrzeuges an einem vordefinierten Empfänger ausgesendet werden. Hierzu weist die Kommunikationsvorrichtung insbesondere eine Verbindung mit dem Mobilfunknetz auf, welche gleichzeitig auch zur Übertragung der Position des Fahrzeuges an die Fernsteuervorrichtung und/oder zum Empfang der Position der Fernsteuervorrichtung dient. Hierdurch kann eine Verkürzung der Rettungszeit erzielt werden. Ebenfalls ist es denkbar, dass die Position des Fahrzeuges zyklisch an einen Vermittlungsdienst, z. B. einen Internetserver, übertragen wird. Somit könnte der Vermittlungsdienst zur Ortung des Fahrzeuges im Notfall genutzt werden.

Ebenfalls Gegenstand der Erfindung ist eine Fernsteuervorrichtung, insbesondere mit einem Mobilfunkgerät (d. h. auch bspw. als Mobilfunkgerät ausgebildet). Die Fernsteuervorrichtung kann zudem bspw. auch ein ID-Geber, ein Handy, Smartphone, Laptop oder dergleichen sein und dient dabei der Fernsteuerung wenigstens einer ersten Funktion einer Sicherheitsvorrichtung eines Fahrzeuges, insbesondere Kraftfahrzeuges, und weist eine erste Funkeinheit auf, wodurch eine Verbindung mit einem Mobilfunknetz betreibbar ist. Dabei ist die Position des Fahrzeuges, die Position der Fernsteuervorrichtung sowie eine Ist-Entfernung zwischen der Position des Fahrzeuges und der Fernsteuervorrichtung insbesondere durch eine Auswerteeinheit bestimmbar. Es ist vorgesehen, dass die Ist-Entfernung mit zumindest einer definierten Soll-Entfernung insbesondere durch die Auswerteeinheit vergleichbar ist, wobei die erste Funktion insbesondere durch die Auswerteeinheit aktivierbar ist, falls die Ist-Entfernung kleiner oder gleich der Soll-Entfernung ist. Damit bringt die erfindungsgemäße Fernsteuervorrichtung die gleichen Vorteile mit sich, wie sie ausführlich mit Bezug auf ein erfindungsgemäßes Verfahren erläutert worden sind. Zudem kann die erfindungsgemäße Fernsteuervorrichtung geeignet sein, das erfindungsgemäße Verfahren auszuführen.

Es ist ferner denkbar, dass die Position der Fernsteuervorrichtung durch die erste Funkeinheit an das Fahrzeug übertragbar ist. Zudem kann es ggf. möglich sein, dass die Position des Fahrzeuges durch die erste Funkeinheit von der Fernsteuervorrichtung empfangbar ist. Ferner kann eine Auswerteeinheit der Fernsteuervorrichtung vorgesehen sein, welche die Positionsdaten empfängt und bspw. einen Mikroprozessor und/oder Mikrocontroller und/oder einen (ARM-)Prozessor aufweist, um die Positionsdaten auszuwerten, ein erfindungsgemäßes Computerprogrammprodukt auszuführen und/oder die Positionen zu bestimmen. Hierzu sind durch die Fernsteuervorrichtung bspw. auch Daten eines internetbasierten Ortungs- und/oder Kartendienstes empfangbar. Somit können die Fernsteuervorrichtung und/oder das Fahrzeug die Positionen der Fernsteuervorrichtung und/oder des Fahrzeuges zur Bestimmung der Ist-Entfernung nutzen.

Vorzugsweise kann vorgesehen sein, dass eine Anzeigeeinheit an der Fernsteuervorrichtung vorgesehen und insbesondere für einen Bediener sichtbar angeordnet ist, wobei die Position des Fahrzeuges auf der Anzeigeeinheit zum Auffinden des Fahrzeuges für einen Bediener anzeigbar ist. Die Anzeigeeinheit kann dabei bspw. einen Touchscreen wie z. B. ein optischer, resistiver oder kapazitiver Touchscreen sein. Damit kann die Anzeigeeinheit ggf. gleichzeitig als Eingabevorrichtung der Fernsteuervorrichtung dienen. Mittels eines Computerprogrammprodukts, wie z. B. einer App, z. B. einer als Smartphone ausgebildeten Fernsteuervorrichtung, kann somit das Fahrzeug geortet werden. Dazu wird bspw. die Position des Fahrzeuges auf einer Karte auf der Anzeigeeinheit angezeigt und/oder die Richtung angegeben, in welcher sich ein Bediener der Fernsteuervorrichtung bewegen muss, um zum Fahrzeug zu gelangen. Hierdurch wird der Vorteil erzielt, dass ein Bediener, welcher den Standort des Fahrzeuges vergessen hat, bei dem Auffinden desselben unterstützt wird.

Zudem ist ein System zur Fernsteuerung wenigstens einer ersten Funktion einer Sicherheitsvorrichtung eines Fahrzeuges Gegenstand der Erfindung. Dabei ist eine Fernsteuervorrichtung vorgesehen, welche eine erste Funkeinheit aufweist, wodurch eine Verbindung mit einem Mobilfunknetz betreibbar ist. Hierbei können die Position des Fahrzeuges, die Position der Fernsteuervorrichtung sowie eine Ist-Entfernung zwischen der Position des Fahrzeuges und der Fernsteuervorrichtung bestimmbar sein. Zudem ist die Ist-Entfernung mit zumindest einer definierten Soll-Entfernung vergleichbar, wobei die erste Funktion aktivierbar ist, falls die Ist-Entfernung kleiner oder gleich der Soll-Entfernung ist. Damit bringt das erfindungsgemäße System die gleichen Vorteile mit sich, wie sie ausführlich mit Bezug auf ein erfindungsgemäßes Verfahren bzw. eine erfindungsgemäße Fernsteuervorrichtung erläutert worden sind. Zudem kann das erfindungsgemäße System eine erfindungsgemäße Fernsteuervorrichtung aufweisen, welche geeignet ist, das erfindungsgemäße Verfahren auszuführen. Zudem kann das erfindungsgemäße System ein erfindungsgemäßes Computerprogrammprodukt, ein erfindungsgemäßes computerlesbares Speichermedium und/oder ein erfindungsgemäßes Fahrzeug aufweisen.

Die erfindungsgemäße Aufgabe wird ebenfalls durch ein Computerprogrammprodukt zur Fernsteuerung wenigstens einer ersten Funktion einer Sicherheitsvorrichtung eines Fahrzeuges gelöst. Hierbei kann das erfindungsgemäße Computerprogrammprodukt derart ausgestaltet sein, dass es ein erfindungsgemäßes Fernsteuerungsverfahren, insbesondere mit einer erfindungsgemäßen Fernsteuervorrichtung und/oder einem erfindungsgemäßen System und/oder einem erfindungsgemäßen Fahrzeug durchführt, insbesondere wenn es von einer Verarbeitungseinheit bzw. einem Prozessor geladen und ausgeführt wird. Damit bringt das erfindungsgemäße Computerprogrammprodukt die gleichen Vorteile mit sich, welche ausführlich mit Bezug auf ein erfindungsgemäßes Verfahren, eine erfindungsgemäße Fernsteuervorrichtung sowie ein erfindungsgemäßes System erläutert worden sind.

Weiterer Gegenstand der Erfindung ist ein Fahrzeug, insbesondere ein Kraftfahrzeug, welches eine Auswertevorrichtung bzw. Fahrzeugelektronik aufweisen kann, um das erfindungsgemäße Verfahren auszuführen. Damit bringt das erfindungsgemäße Fahrzeug die gleichen Vorteile mit sich, wie sie ausführlich mit Bezug auf ein erfindungsgemäßes Verfahren, eine erfindungsgemäße Fernsteuervorrichtung, ein erfindungsgemäßes System, ein erfindungsgemäßes Computerprogrammprodukt bzw. ein erfindungsgemäßes computerlesbares Speichermedium erläutert worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Darstellung eines erfindungsgemäßen Fahrzeuges, einer erfindungsgemäßen Fernsteuervorrichtung sowie eines erfindungsgemäßen Systems,
- Figur 2a-c: eine schematische Darstellung zur Visualisierung einer Ist-Entfernung und einer Soll-Entfernung,
- Figur 3: eine schematische Darstellung zur Visualisierung einer Mobilfunk-Ortung,
- Figur 4: eine schematische Darstellung eines Ausführungsbeispiels einer erfindungsgemäßen Fernsteuervorrichtung sowie eines erfindungsgemäßen Fahrzeuges,
- Figur 5: eine schematische Darstellung eines weiteren Ausführungsbeispiels einer erfindungsgemäßen Fernsteuervorrichtung und eines erfindungsgemäßen Fahrzeuges,
- Figur 6: eine schematische Darstellung zur Visualisierung eines erfindungsgemäßen Verfahrens und
- Figur 7: eine schematische Darstellung zur Visualisierung eines erfindungsgemäßen Computerprogrammprodukts und eines erfindungsgemäßen computerlesbaren Speichermediums.

In den nachfolgenden Figuren werden für die gleichen technischen Merkmale auch von unterschiedlichen Ausführungsbeispielen die identischen Bezugszeichen verwendet.

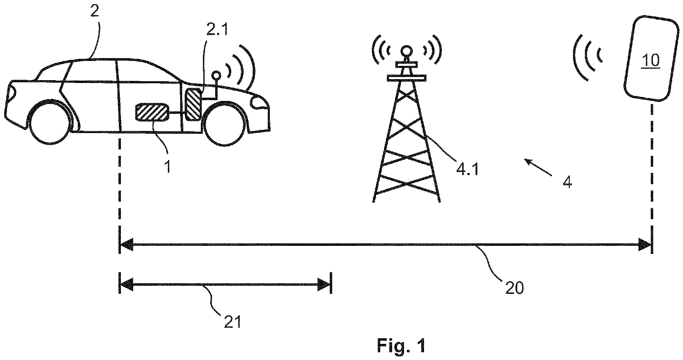

In Figur 1 ist schematisch ein erfindungsgemäßes System gezeigt, aufweisend ein erfindungsgemäßes Fahrzeug 2 und eine erfindungsgemäße Fernsteuervorrichtung 10. Hierbei ist die Entfernung zwischen dem Fahrzeug 2 und der Fernsteuervorrichtung 10 als Ist-Entfernung 20 dargestellt. Dabei kann die Ist-Entfernung 20 im Wesentlichen die kürzeste Entfernung zwischen dem Fahrzeug 2 und der Fernsteuervorrichtung 10, z. B. über den direkten Luftweg sein. Zur Berechnung der Ist-Entfernung 20 kann bspw. digital gespeichertes Kartenmaterial, z. B. auf dem erfindungsgemäßen computerlesbaren Speichermedium, bzw. eine digitale Datenbank mit entsprechenden Koordinaten genutzt werden. Eine solche Datenbank weist bspw. das Navigationssystem des Fahrzeuges 2 auf, dessen Funktionalität zur Berechnung der Ist-Entfernung 20 genutzt werden kann. Ebenfalls ist es denkbar, dass zur Positionsbestimmung auch andere Dienste und/oder Technologien, wie Satellit, Funk, GSM bzw. Mobilfunk und/oder digitale Geoinformationsdienste genutzt werden. Neben einer Bestimmung der Position des Fahrzeuges 2 durch z. B. ein GPS-System 6 und/oder durch eine Kommunikationsvorrichtung 2.1 des Fahrzeuges 2 ist es zur Ermittlung der Ist-Entfernung 20 notwendig, auch die Position der Fernsteuervorrichtung 10 zu kennen. Dazu wird die Position der Fernsteuervorrichtung 10 durch die Fernsteuervorrichtung 10 z. B. mittels des GPS-Systems 6 und/oder durch eine Mobilfunk-Ortung bestimmt und z. B. über ein Mobilfunknetz 4 an das Fahrzeug 2 übertragen. Zur Veranschaulichung ist dafür in Figur 1 eine Funkantenne 4.1 des Mobilfunknetzes 4 gezeigt, wobei auch weitere Vermittlungsstationen zur Datenübertragung zwischen der Fernsteuervorrichtung 10 und dem Fahrzeug 2 genutzt werden. Zum Senden und Empfangen von Signalen und/oder Daten über das Mobilfunknetz 4 weist das Fahrzeug 2 die Kommunikationsvorrichtung 2.1 auf. Ferner ist in Figur 1 eine Soll-Entfernung 21 gezeigt, welche in dem dargestellten Beispiel kleiner als die Ist-Entfernung 20 ist. Nähert sich ein Bediener mit der Fernsteuervorrichtung 10 dem Fahrzeug 2, so wird die Differenz zwischen der Soll-Entfernung 21 und der Ist-Entfernung 20 geringer, wobei eine erste Funktion des Fahrzeuges 2 aktiviert wird, falls die Ist-Entfernung 20 kleiner oder gleich der Soll-Entfernung 21 ist. Somit kann z. B. bei einer Annäherung des Bedieners die Schließvorrichtung des Fahrzeuges 2 entriegelt werden oder eine sonstige Funktion einer Sicherheitsvorrichtung 1 erfolgen.

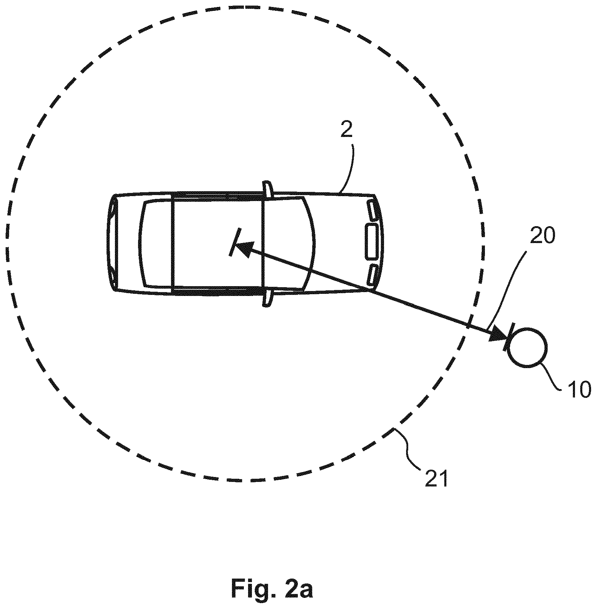

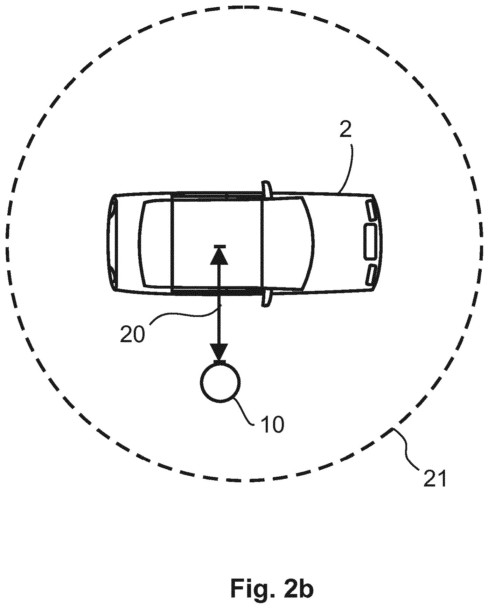

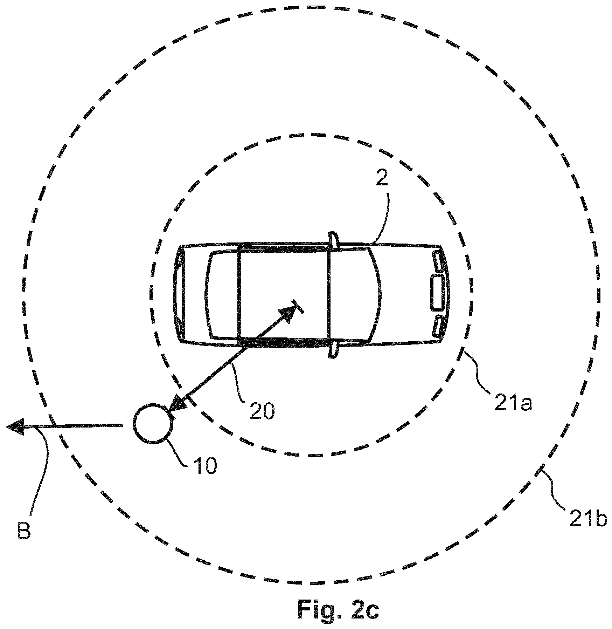

In Figur 2a wird dieses Prinzip näher erläutert. Die Fernsteuervorrichtung 10 ist dabei schematisch (in einer Draufsicht) als Kreis dargestellt, welcher sich in einem Abstand, welcher durch die Ist-Entfernung 20 dargestellt ist, von dem Fahrzeug 2 befindet. Die Darstellungen in den Figuren sind dabei nicht maßstabsgetreu, sondern sollen lediglich einer prinzipiellen Erläuterung dienen. Die Soll-Entfernung 21 kann sich dabei ausgehend von dem Fahrzeug 2 in sämtliche Himmelsrichtungen erstrecken und damit einen Entfernungsradius bilden. Dabei befindet sich die Fernsteuervorrichtung 10 in Figur 2a außerhalb und in Figur 2b innerhalb dieses Radius der Soll-Entfernung 21. Bei dem Eintreten in den Radius, d. h. falls die Ist-Entfernung 20 kleiner oder gleich der Soll-Entfernung 21 ist, wird eine erste Funktion des Fahrzeuges aktiviert. Dies ist bspw. in Figur 2b der Fall. Ebenfalls ist es eine stufenweise Aktivierung von Funktionen denkbar, wie z. B. in Figur 2c dargestellt ist. Dabei ist eine erste Soll-Entfernung 21a und eine zweite Soll-Entfernung 21b definiert. Zudem können auch weitere Soll-Entfernungen 21 vorgesehen sein, welche weiteren Funktionen des Fahrzeuges 2 zugeordnet sind. In Figur 2c befindet sich die Fernsteuervorrichtung 10 innerhalb des Radius der zweiten Soll-Entfernung 21b, jedoch nicht innerhalb des Radius der ersten Soll-Entfernung 21a. Daher wurde in Figur 2c lediglich eine zweite Funktion des Fahrzeuges 2 aktiviert, welche der zweiten Soll-Entfernung 21b zugeordnet ist. Dies kann bspw. die Aktivierung einer Beleuchtung des Fahrzeuges 2 sein, wobei die Schließvorrichtung des Fahrzeuges 2 erst freigegeben wird, damit der Zugang zum Fahrzeug 2 gewährt wird, wenn die Fernsteuervorrichtung 10 den Radius der ersten Soll-Entfernung 21a betritt und damit die Ist-Entfernung 20 kleiner oder gleich der ersten Soll-Entfernung 21a ist. Wie durch einen Pfeil B veranschaulicht, bewegt sich jedoch die Fernsteuervorrichtung 10 (bzw. der Bediener mit der Fernsteuervorrichtung 10) in Richtung des Pfeils B und entfernt sich somit von dem Fahrzeug 2. Es kann daher, bspw. auch durch eine Auswertevorrichtung 2.2 des Fahrzeuges 2 und/oder einer Auswerteeinheit 10.1 der Fernsteuervorrichtung 10 vorhergesagt werden, dass die Fernsteuervorrichtung 10 sich aus dem Radius der zweiten Soll-Entfernung 21b entfernt. Hierzu kann die Fernsteuervorrichtung 10 z. B. auch dem Fahrzeug 2 entsprechende Informationen bzw. Befehle übertragen. Es kann dann z. B., falls die Ist-Entfernung 20 größer als die zweite Soll-Entfernung 21b ist, eine weitere Funktion aktiviert oder die zweite Funktion deaktiviert werden, welche der zweiten Soll-Entfernung 21b zugeordnet ist. Dies kann bspw. die Deaktivierung einer Beleuchtung des Fahrzeuges 2 sein.

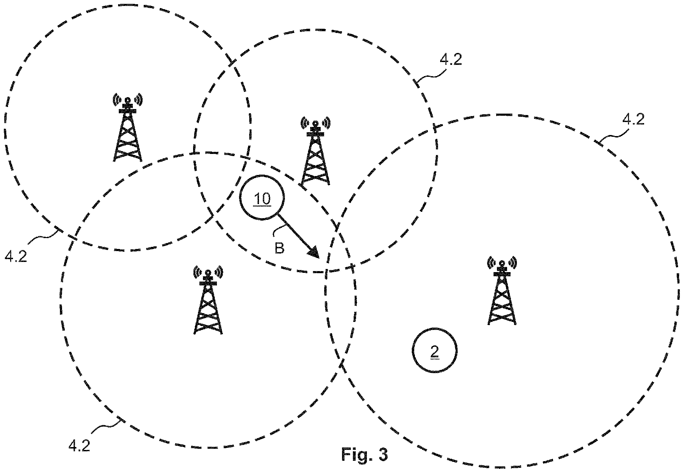

Die Bestimmung der Position kann sowohl für die Fernsteuervorrichtung 10 als auch für das Fahrzeug 2 durch ein GPS-System 6 und/oder durch eine Mobilfunk-Ortung erfolgen. Die Mobilfunk-Ortung ist dabei in Figur 3 schematisch dargestellt. Bei der Mobilfunk-Ortung, welche bspw. eine GSM-Ortung sein kann, kann die Position des Fahrzeuges 2 und/oder der Fernsteuervorrichtung 10 aufgrund deren Verbindung zum Mobilfunknetz 4 ermittelt werden. Die Mobilfunk-Ortung kann dabei unabhängig von einem GPS-System 6 und/oder zur Verbesserung der Genauigkeit der Positionsdaten des GPS-Systems 6 genutzt werden. Zur Ortung werden dabei die Positionen der schematisch dargestellten Funkzellen 4.2 genutzt, in welchen sich die Fernsteuervorrichtung 10 bzw. das Fahrzeug 2 befinden. Zur näheren Bestimmung der Position wird dabei z. B. die Signallaufzeit zwischen dem Mobilfunkgerät (z. B. der Fernsteuervorrichtung 10 und/oder des Fahrzeuges 2 bzw. der Kommunikationsvorrichtung 2.1) und einer Basisstation des Mobilfunknetzes 4 ausgewertet. Zur weiteren Verbesserung der Positionsbestimmung ist es z. B. möglich, dass Signallaufzeitdifferenzen des Mobilfunkgeräts zu zumindest zwei Basisstationen gemessen werden. Wie in Figur 3 dargestellt ist, können ebenfalls weitere Parameter, wie z. B. die Bewegungsrichtung B genutzt werden. Damit kann z. B. vorhergesagt werden, dass sich die Fernsteuervorrichtung 10 in Richtung des Fahrzeuges 2 bewegt und daher z. B. ein Zeitintervall zur Bestimmung der Position verringert werden sollte.

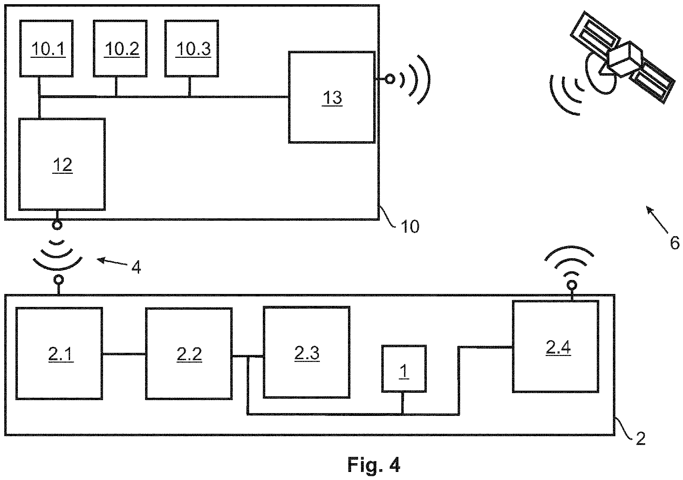

In Figur 4 ist schematisch ein Aufbau von Teilen einer erfindungsgemäßen Fernsteuervorrichtung 10 sowie eines erfindungsgemäßen Fahrzeuges 2 gezeigt. Dabei umfasst die Fernsteuervorrichtung 10 eine Auswerteeinheit 10.1, eine Speichereinheit 10.2 sowie eine Anzeigeeinheit 10.3, welche z. B. elektronisch miteinander verbunden sind. Ebenfalls kann vorgesehen sein, dass die Fernsteuervorrichtung 10 eine erste Funkeinheit 12 sowie eine zweite Funkeinheit 13 aufweist, welche ebenfalls z. B. mit der Auswerteeinheit 10.1 elektronisch verbunden sind. Die erste Funkeinheit 12 dient dabei zur Verbindung mit einem Mobilfunknetz 4, wodurch z. B. eine Datenverbindung mit dem Fahrzeug 2 herstellbar ist. Zum Betreiben der Verbindung zu dem Mobilfunknetz 4 kann das Fahrzeug 2 wiederum eine Kommunikationsvorrichtung 2.1 aufweisen, worüber die von der Fernsteuervorrichtung 10 übersendeten Daten empfangbar und Daten an die Fernsteuervorrichtung 10 übertragbar sind. Über diese Verbindung können bspw. Daten zur Positionsbestimmung und/oder die Position des Fahrzeuges 2 bzw. der Fernsteuervorrichtung 10 übertragen werden. Dabei kann die zweite Funkeinheit 13 der Fernsteuervorrichtung 10 dazu geeignet sein, Positionsdaten eines GPS-Systems 6 zu empfangen, ggf. zur Bestimmung der Position auszuwerten, z. B. durch die Auswerteeinheit 10.1. Die ausgewerteten Positionsdaten können dabei in einer insbesondere nicht flüchtigen Speichereinheit 10.2 gespeichert und/oder an einer Anzeigeeinheit 10.3 für einen Bediener dargestellt werden. Die Daten werden zur Übertragung an die erste Funkeinheit 12 - als ausgewertete, bestimmte Position der Fernsteuervorrichtung 10 und/oder unverändert als Positionsdaten des GPS-Systems 6 - übermittelt, über das Mobilfunknetz 4 versendet und von der Kommunikationsvorrichtung 2.1 empfangen. Anschließend werden die Positionsdaten, z. B. zur Bestimmung der Ist-Entfernung 20, durch die Auswertevorrichtung 2.2 des Fahrzeuges 2 ausgewertet. Die Auswertevorrichtung 2.2 kann bspw. eine Fahrzeugelektronik 2.2 sein. Zudem kann die Auswertevorrichtung 2.2 elektronisch mit einer nicht flüchtigen Speichervorrichtung 2.3 des Fahrzeuges 2 verbunden sein, wobei die Speichervorrichtung 2.3 z. B. auch geographische Koordinaten umfassen kann. Erkennt die Auswertevorrichtung 2.2 nun, dass z. B. die Ist-Entfernung 20 kleiner oder gleich einer Soll-Entfernung 21 ist, so kann eine erste Funktion z. B. einer Sicherheitsvorrichtung 1 des Fahrzeuges 2 aktiviert werden. Dazu weist die Auswertevorrichtung 2.2 eine elektronische Verbindung zu der Sicherheitsvorrichtung 1 auf, um ein entsprechendes Signal zur Aktivierung zu übermitteln. Ferner muss das Fahrzeug 2 zur Bestimmung der Ist-Entfernung 20 auch die eigene Position bestimmen, wobei hierzu die Auswertevorrichtung 2.2 z. B. elektronisch mit einer fahrzeugseitigen Funkeinheit 2.4 verbunden sein kann. Die fahrzeugseitige Funkeinheit 2.4 kann dabei die gleichen Merkmale aufweisen, welche im Zusammenhang mit der zweiten Funkeinheit 13 beschrieben worden sind und damit insbesondere einen Empfang von Positionsdaten des GPS-Systems 6 ermöglichen.

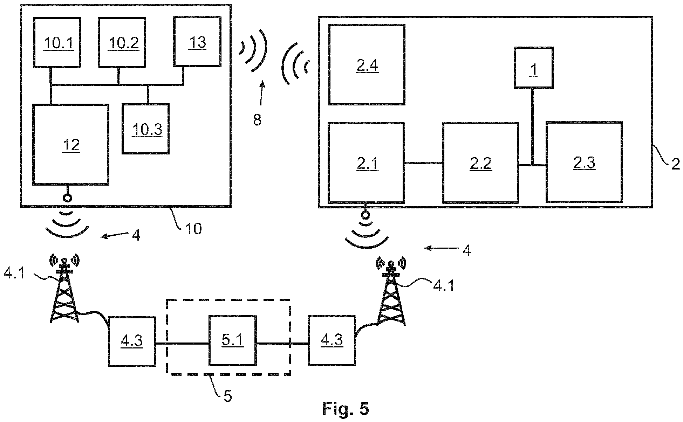

In Figur 5 ist ein weiteres Ausführungsbeispiel einer erfindungsgemäßen Vorrichtung 10 gezeigt. Hierbei erfolgt die Positionsbestimmung nicht über ein GPS-System 6, sondern über eine Mobilfunk-Ortung, d. h. über eine Auswertung der empfangenen Daten und/oder Signale eines Mobilfunknetzes 4. Ferner ist eine zweite Funkeinheit 13 der Fernsteuervorrichtung 10 und eine fahrzeugseitige Funkeinheit 2.4 gezeigt, welche zum Betrieb einer Bluetooth-Verbindung 8 geeignet sind. Die Bluetooth-Verbindung 8 kann bspw. zur Übertragung von Daten zur Authentifizierung genutzt werden, falls sich die Fernsteuervorrichtung 10 im näheren Bereich des Fahrzeuges 2 befindet. Auch ist eine Positionsbestimmung, z. B. durch Auswertung der Signalstärke, ggf. durch die zweite Funkeinheit 13 und/oder fahrzeugseitige Funkeinheit 2.4 möglich. Vorzugsweise ist es vorgesehen, dass die Bluetooth-Verbindung 8 aktiviert wird, falls die Ist-Entfernung 20 kleiner oder gleich der Soll-Entfernung 21 ist. Zur Positionsbestimmung und zur Übertragung der Position wird dabei lediglich eine Mobilfunkverbindung 4 genutzt, wobei Daten und/oder Signale an eine Funkantenne 4.1 übertragen und von zumindest einer Verbindungsstation (z. B. Schnittstelle bzw. Gateway 4.3) empfangen und/oder weiter vermittelt werden. Dabei können die Schnittstellen 4.3 eine Verbindung zu einem Internet 5 oder einem vergleichbaren Netzwerk herstellen. Hierbei kann zudem ein Vermittlungsdienst 5.1 vorgesehen sein, welcher die Daten z. B. von der Fernsteuervorrichtung 10 empfängt und an das Fahrzeug 2 weiter vermittelt. Da der Vermittlungsdienst 5.1 somit einen zentralen Knotenpunkt für die Übertragung der Positionsdaten bzw. der Position des Fahrzeuges 2 und/oder der Fernsteuervorrichtung 10 darstellt, ist es denkbar, dass Verfahrensschritte z. B. zur Bestimmung einer Ist-Entfernung 20 von dem Vermittlungsdienst 5.1 durchgeführt werden.

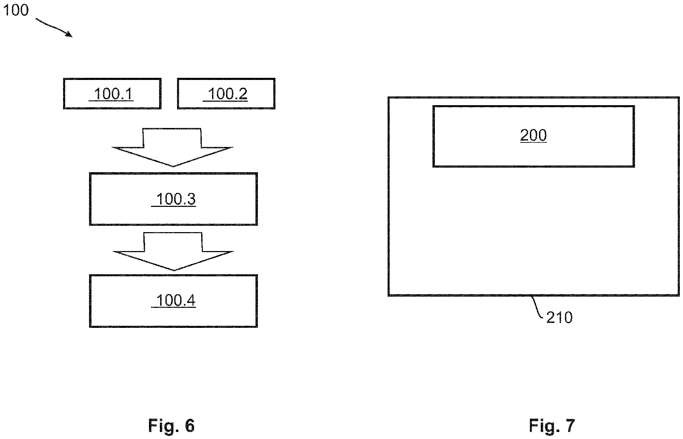

In Figur 6 ist schematisch ein erfindungsgemäßes Verfahren 100 visualisiert. Dabei ist ein erster Verfahrensschritt 100.1 vorgesehen, wobei die Position des Fahrzeuges 2 bestimmt wird. In einem zweiten Verfahrensschritt 100.2 wird die Position der Fernsteuervorrichtung 10 bestimmt. Dabei ist die Reihenfolge der Verfahrensschritte nicht festgelegt. In einem dritten Verfahrensschritt 100.3 wird eine Ist-Entfernung 20 bestimmt, wobei hierzu die Position des Fahrzeuges 2 und die Position der Fernsteuervorrichtung 10 zur Bestimmung herangezogen werden. Anschließend wird im vierten Verfahrensschritt 100.4 die Ist-Entfernung 20 mit zumindest einer definierten Soll-Entfernung 21 verglichen, wobei eine erste Funktion des Fahrzeuges 2 aktiviert wird, falls die Ist-Entfernung 20 kleiner oder gleich der Soll-Entfernung 21 ist.

In Figur 7 ist schematisch ein erfindungsgemäßes computerlesbares Speichermedium 210 gezeigt, welches das erfindungsgemäße Computerprogrammprodukt 200 umfasst. Das computerlesbare Speichermedium 210 ist vorzugsweise durch eine Auswerteeinheit 10.1 und/oder eine Auswertevorrichtung 2.2, d. h. z. B. einen Prozessor, einen Mikroprozessor und/oder einen Mikrocontroller, auslesbar gestaltet, so dass das erfindungsgemäße Computerprogrammprodukt 200 durch die Auswerteeinheit 10.1 und/oder Auswertevorrichtung 2.2 ausgeführt werden und so das erfindungsgemäße Verfahren durchführen kann.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezuaszeichenliste

- 1: Sicherheitsvorrichtung
- 2: Fahrzeug
- 2.1: Kommunikationsvorrichtung
- 2.2: Auswertevorrichtung, Fahrzeugelektronik
- 2.3: (nicht-flüchtige) Speichervorrichtung
- 2.4: Fahrzeugseitige Funkeinheit

- 4: Mobilfunknetz
- 4.1: Funkantenne
- 4.2: Funkzelle
- 4.3: Schnittstelle, Gateway
- 5: Internet
- 5.1: Vermittlungsdienst
- 6: GPS-System
- 8: Bluetooth-Verbindung

- 10: Fernsteuervorrichtung
- 10.1: Auswerteeinheit
- 10.2: Speichereinheit
- 10.3: Anzeigeeinheit

- 12: Erste Funkeinheit
- 13: Zweite Funkeinheit

- 20: Ist-Entfernung
- 21: Soll-Entfernung
- 21a: Erste Soll-Entfernung
- 21b: Zweite Soll-Entfernung
- 100: Verfahren
- 100.1: Erster Verfahrensschritt: Bestimmung der Position des Fahrzeuges
- 100.2: Zweiter Verfahrensschritt: Bestimmung der Position der Fernsteuervorrichtung
- 100.3: Dritter Verfahrensschritt: Bestimmung einer Ist-Entfernung
- 100.4: Vierter Verfahrensschritt: Vergleich der Ist-Entfernung mit einer Soll-Entfernung

- 200: Computerprogrammprodukt
- 210: Computerlesbares Speichermedium

- B: Bewegungsrichtung

## Patentansprüche

1. Verfahren (100) zur Fernsteuerung wenigstens einer ersten Funktion einer Sicherheitsvorrichtung (1) eines Fahrzeuges (2),
wobei eine Fernsteuervorrichtung (10) eine erste Funkeinheit (12) aufweist, wodurch eine Verbindung mit einem Mobilfunknetz (4) betreibbar ist,
wobei die nachfolgenden Schritte durchgeführt werden:
a) Bestimmung der Position des Fahrzeuges (2)
b) Bestimmung der Position der Fernsteuervorrichtung (10)
c) Bestimmung einer Ist-Entfernung (20) zwischen der Position des Fahrzeuges (2) und der Fernsteuervorrichtung (10)
d) Vergleich der Ist-Entfernung (20) mit zumindest einer definierten Soll-Entfernung (21), wobei die erste Funktion aktiviert wird, falls die Ist-Entfernung (20) kleiner oder gleich der Soll-Entfernung (21) ist,
wobei der nachfolgende Schritt als erste Funktion durchgeführt wird:
e) kontaktlose Authentifizierung der Fernsteuervorrichtung (10),
**dadurch gekennzeichnet,**
**dass** die Schritte b), c), d) und e) in Abhängigkeit eines situationsabhängigen Zustandsparameters der Fernsteuervorrichtung (10) zyklisch durchgeführt werden.

2. Fernsteuerungsverfahren (100) nach Anspruch 1,
**dadurch gekennzeichnet,**
**dass** die kontaktlose Authentifizierung der Fernsteuervorrichtung (10) über das Mobilfunknetz (4) und/oder eine Bluetooth-Verbindung (8) und/oder eine Bluetooth-Low-Power-Verbindung bei der Sicherheitsvorrichtung (1) des Fahrzeuges (2) erfolgt.

3. Fernsteuerungsverfahren (100) nach Anspruch 1 oder 2,
**dadurch gekennzeichnet,**
**dass** bei Schritt e) ein Sicherheitscode zwischen der Fernsteuervorrichtung (10) und der Sicherheitsvorrichtung (1) des Fahrzeuges (2) ausgetauscht wird,
wobei insbesondere der Sicherheitscode ein IMEI-Code der Fernsteuervorrichtung (10), einen generierten Code und/oder einen definierten Code insbesondere zur eindeutigen Identifizierung der Fernsteuervorrichtung (10) aufweisen kann und/oder
**dass** nach einer erfolgreichen Authentifizierung ein Zugang zum Fahrzeug (2) durch die Sicherheitsvorrichtung (1) freigegeben wird.

4. Fernsteuerungsverfahren (100) nach einem der vorhergehenden Ansprüche,
**dadurch gekennzeichnet,**
**dass** der Schritt a) und/oder b) und/oder c) und/oder d) durch das Fahrzeug (2), insbesondere eine Fahrzeugelektronik (2.2), durchgeführt wird, wobei insbesondere zur Bestimmung der Ist-Entfernung (20) die Position der Fernsteuervorrichtung (10) durch eine Kommunikationsvorrichtung (2.1) des Fahrzeuges (2) empfangen wird.

5. Fernsteuerungsverfahren (100) nach einem der vorhergehenden Ansprüche,
**dadurch gekennzeichnet,**
**dass** eine erste Soll-Entfernung (21a) und zumindest eine zweite Soll-Entfernung (21b) definiert sind, wobei bei Schritt d) eine erste Funktion aktiviert wird, falls die Ist-Entfernung (20) kleiner oder gleich der ersten Soll-Entfernung (21a) ist, und zumindest eine zweite Funktion aktiviert wird, falls die Ist-Entfernung (20) kleiner oder gleich der zweiten Soll-Entfernung (21b) ist.

6. Fernsteuerungsverfahren (100) nach einem der vorhergehenden Ansprüche,
**dadurch gekennzeichnet,**
**dass** Schritt a) bei jedem Stillstand des Fahrzeuges (2) durchgeführt wird und/oder
**dass** Schritt b) und/oder c) und/oder e) in Abhängigkeit der Ist-Entfernung (20) zeitabhängig, insbesondere zyklisch, durchgeführt wird.

7. Fernsteuerungsverfahren (100) nach einem der vorhergehenden Ansprüche,
**dadurch gekennzeichnet,**
**dass** die Fernsteuervorrichtung (10) und/oder das Fahrzeug (2) ihre Positionsdaten kontaktlos empfangen,
wobei insbesondere die Positionsdaten von einem Navigationssystem, einem Mobilfunknetz (4) durch Ermittlung der Mobilfunkzellen (4.2) und/oder einem Netzwerk kommen und/oder
**dass** die Fernsteuervorrichtung (10) und/oder das Fahrzeug (2) eine zweite Funkeinheit (13) zum Empfang der Positionsdaten und/oder zur Authentifizierung aufweist, wobei durch die zweite Funkeinheit (13) insbesondere eine Verbindung mit einem GPS-, WLAN-, Mobilfunk-, und/oder Bluetooth-Netz betreibbar ist.

8. Fernsteuerungsverfahren (100) nach einem der vorhergehenden Ansprüche,
**dadurch gekennzeichnet,**
**dass** das Mobilfunknetz (4) nach einem GSM, GPRS, UMTS und/oder LTE Standard ausgebildet ist, und insbesondere eine Datenverbindung zu einem Internet (5) und/oder einem Vermittlungsdienst (5.1) und/oder zu dem Fahrzeug (2) aufweist.

9. Fernsteuerungsverfahren (100) nach einem der vorhergehenden Ansprüche,
**dadurch gekennzeichnet,**
**dass** das Fahrzeug (2) eine Kommunikationsvorrichtung (2.1) aufweist, wodurch eine Datenverbindung mit der Fernsteuervorrichtung (10) betreibbar ist und/oder
**dass** eine Kommunikationsvorrichtung (2.1) des Fahrzeuges (2) zum Betreiben einer Datenverbindung mit der Fernsteuervorrichtung (10) vorgesehen ist, wobei insbesondere bei einem Unfall des Fahrzeuges (2) ein Notsignal über die Kommunikationsvorrichtung (2.1) ausgesendet wird.

10. Fernsteuervorrichtung (10), insbesondere mit einem Mobilfunkgerät, und zur Fernsteuerung wenigstens einer ersten Funktion einer Sicherheitsvorrichtung (1) eines Fahrzeuges (2), mit
einer ersten Funkeinheit (12), wodurch eine Verbindung mit einem Mobilfunknetz (4) betreibbar ist, und
einer Auswerteeinheit (10.1), die zum Betreiben der Fernsteuervorrichtung (10) nach einem Fernsteuerungsverfahrens (100) nach einem der Ansprüche 1 bis 9 ausgebildet ist,
wobei die Position des Fahrzeuges (2) durch die erste Funkeinheit (12) empfangbar ist und die Position der Fernsteuervorrichtung (10) sowie eine Ist-Entfernung (20) zwischen der Position des Fahrzeuges (2) und der Fernsteuervorrichtung (10) durch die Auswerteeinheit (10.1) bestimmbar ist, und
die Ist-Entfernung (20) mit zumindest einer definierten Soll-Entfernung (21) durch die Auswerteeinheit (10.1) vergleichbar ist, wobei
die erste Funktion aktivierbar ist, falls die Ist-Entfernung (20) kleiner oder gleich der Soll-Entfernung (21) ist.

11. Fernsteuervorrichtung (10) nach dem vorhergehenden Anspruch,
**dadurch gekennzeichnet,**
**dass** die Position der Fernsteuervorrichtung (10) durch die erste Funkeinheit (12) an das Fahrzeug (2) übertragbar ist und/oder
**dass** eine Anzeigeeinheit (10.3) an der Fernsteuervorrichtung (10) angeordnet ist, wobei die Position des Fahrzeuges (2) auf der Anzeigeeinheit (10.3) zum Auffinden des Fahrzeuges (2) für einen Bediener anzeigbar ist.

12. Fahrzeug (2) aufweisend eine Kommunikationsvorrichtung zum Empfangen der Position der Fernsteuervorrichtung (10) und eine Fahrzeugelektronik (2.2) zum Ausführen eines Verfahrens (100) nach einem der Ansprüche 1 bis 9.

13. System zur Fernsteuerung wenigstens einer ersten Funktion einer Sicherheitsvorrichtung (1) eines Fahrzeuges (2),
mit der Sicherheitsvorrichtung (1) und einer Fernsteuervorrichtung (10) zum Ausführen eines Fernsteuerungsverfahrens (100) nach einem der Ansprüche 1 bis 9,
wobei die Fernsteuervorrichtung (10) eine erste Funkeinheit (12) aufweist, wodurch eine Verbindung mit einem Mobilfunknetz (4) betreibbar ist, wobei die Position des Fahrzeuges (2), die Position der Fernsteuervorrichtung (10) sowie eine Ist-Entfernung (20) zwischen der Position des Fahrzeuges (2) und der Fernsteuervorrichtung (10) durch eine Fahrzeugelektronik (2.2) und/oder durch eine Auswerteeinheit (10.1) der Fernsteuervorrichtung (10) bestimmbar ist, und
die Ist-Entfernung (20) mit zumindest einer definierten Soll-Entfernung (21) durch eine Fahrzeugelektronik (2.2) und/oder durch eine Auswerteeinheit (10.1) der Fernsteuervorrichtung (10) vergleichbar ist, wobei
die erste Funktion aktivierbar ist, falls die Ist-Entfernung (20) kleiner oder gleich der Soll-Entfernung (21) ist.

14. System nach dem vorhergehenden Anspruch,
**dadurch gekennzeichnet,**
**dass** eine Fernsteuervorrichtung (10) nach einem der Ansprüche 10 bis 11 vorgesehen ist.

15. Computerprogrammprodukt (200) zur Fernsteuerung wenigstens einer ersten Funktion einer Sicherheitsvorrichtung (1) eines Fahrzeuges (2),
**dadurch gekennzeichnet,**
**dass** das Computerprogrammprodukt (200) derart ausgestaltet ist, dass es ein Fernsteuerungsverfahren (100) nach einem der Ansprüche 1 bis 9 durchführt, wenn es von einer Verarbeitungseinheit geladen und ausgeführt wird.

## Claims

1. Method (100) for remotely controlling at least a first function of a safety device (1) of a vehicle (2),
wherein a remote control device (10) comprises a first radio unit (12), whereby a connection to a mobile radio network (4) is operable,
whereby the following steps are carried out:
a) determination of the position of the vehicle (2)
b) determination of the position of the remote control device (10)
c) determination of an actual distance (20) between the position of the vehicle (2) and the remote control device (10)
d) comparison of the actual distance (20) with at least one defined target distance (21), the first function being activated if the actual distance (20) is less than or equal to the target distance (21),
where the following step is performed as the first function:
e) contactless authentication of the remote control device (10),
**characterized in that**
the steps b), c), d) and e) are carried out cyclically as a function of a situation-dependent state parameter of the remote control device (10).

2. Remote control method (100) according to claim 1,
**characterized in that**
the contactless authentication of the remote control device (10) takes place via the mobile radio network (4) and/or a Bluetooth connection (8) and/or a Bluetooth low-power connection at the safety device (1) of the vehicle (2).

3. Remote control method (100) according to claim 1 or 2,
**characterized in that**
in step e), a security code is exchanged between the remote control device (10) and the safety device (1) of the vehicle (2),
wherein in particular the security code may comprise an IMEI code of the remote control device (10), a generated code and/or a defined code in particular for unambiguous identification of the remote control device (10) and/or
that after a successful authentication an access to the vehicle (2) is released by the safety device (1).

4. Remote control method (100) according to any one of the preceding claims,
**characterized in that**
step a) and/or b) and/or c) and/or d) is carried out by the vehicle (2), in particular a vehicle electronic system (2.2), the position of the remote control device (10) being received by a communication device (2.1) of the vehicle (2), in particular for determining the actual distance (20).

5. Remote control method (100) according to any one of the preceding claims,
**characterized in that**
a first target distance (21a) and at least a second target distance (21b) are defined, wherein in step d) a first function is activated if the actual distance (20) is smaller than or equal to the first target distance (21a), and at least a second function is activated if the actual distance (20) is smaller than or equal to the second target distance (21b).

6. Remote control method (100) according to any one of the preceding claims,
**characterized in that**
step a) is carried out whenever the vehicle (2) is at a standstill and/or
**in that** step b) and/or c) and/or e) is carried out as a function of the actual distance (20) in a time-dependent manner, in particular cyclically.

7. Remote control method (100) according to any one of the preceding claims,
**characterized in that**
the remote control device (10) and/or the vehicle (2) receive their position data without contact,
wherein in particular the position data come from a navigation system, a mobile radio network (4) by determining the mobile radio cells (4.2) and/or a network and/or
**in that** the remote control device (10) and/or the vehicle (2) has a second radio unit (13) for receiving the position data and/or for authentication, it being possible to operate a connection to a GPS, WLAN, mobile radio and/or Bluetooth network in particular by means of the second radio unit (13).

8. Remote control method (100) according to any one of the preceding claims,
**characterized in that**
the mobile radio network (4) is designed according to a GSM, GPRS, UMTS and/or LTE standard, and in particular has a data connection to an Internet (5) and/or a switching service (5.1) and/or to the vehicle (2).

9. Remote control method (100) according to any one of the preceding claims,
**characterized in that**
the vehicle (2) has a communication device (2.1), whereby a data connection with the remote control device (10) can be operated and/or
**in that** a communication device (2.1) of the vehicle (2) is provided for operating a data connection with the remote control device (10), an emergency signal being transmitted via the communication device (2.1) in particular in the event of an accident of the vehicle (2).

10. Remote control device (10), in particular with a mobile radio unit, and for remote control of at least a first function of a safety device (1) of a vehicle (2), having
a first radio unit (12), whereby a connection to a mobile radio network (4) is operable, and an evaluation unit (10.1) configured to operate the remote control device (10) according to a remote control method (100) according to any one of claims 1 to 9,
wherein the position of the vehicle (2) can be received by the first radio unit (12) and the position of the remote control device (10) as well as an actual distance (20) between the position of the vehicle (2) and the remote control device (10) can be determined by the evaluation unit (10.1), and
the actual distance (20) can be compared with at least one defined target distance (21) by the evaluation unit (10.1), wherein
the first function can be activated if the actual distance (20) is smaller than or equal to the target distance (21).

11. Remote control device (10) according to the preceding claim,
**characterized in that**
the position of the remote control device (10) can be transmitted to the vehicle (2) by the first radio unit (12) and/or
**in that** a display unit (10.3) is arranged on the remote control device (10), it being possible for the position of the vehicle (2) to be displayed on the display unit (10.3) for an operator to find the vehicle (2).

12. A vehicle (2) comprising a communication device for receiving the position of the remote control device (10) and vehicle electronics (2.2) for performing a method (100) according to any one of claims 1 to 9.

13. System for remote control of at least a first function of a safety device (1) of a vehicle (2), comprising the safety device (1) and a remote control device (10) for carrying out a remote control method (100) according to any one of claims 1 to 9,
the remote control device (10) having a first radio unit (12), whereby a connection to a mobile radio network (4) can be operated, the position of the vehicle (2), the position of the remote control device (10) and an actual distance (20) between the position of the vehicle (2) and the remote control device (10) being determinable by vehicle electronics (2.2) and/or by an evaluation unit (10.1) of the remote control device (10), and can be determined by vehicle electronics (2.2) and/or by an evaluation unit (10.1) of the remote control device (10), and
the actual distance (20) can be compared with at least one defined target distance (21) by vehicle electronics (2.2) and/or by an evaluation unit (10.1) of the remote control device (10), wherein
the first function can be activated if the actual distance (20) is less than or equal to the target distance (21).

14. System according to the preceding claim,
**characterized in that**
a remote control device (10) according to one of claims 10 to 11 is provided.

15. Computer program product (200) for remotely controlling at least a first function of a safety device (1) of a vehicle (2),
**characterized in that**
the computer program product (200) is configured to perform a remote control method (100) according to any one of claims 1 to 9 when loaded and executed by a processing unit.

## Revendications

1. Procédé (100) de commande à distance d'au moins une première fonction d'un dispositif de sécurité (1) d'un véhicule (2),
dans lequel un dispositif de commande à distance (10) présente une première unité radio (12), grâce à laquelle une liaison avec un réseau de téléphonie mobile (4) peut être exploitée,
en effectuant les étapes suivantes :
a) détermination de la position du véhicule (2)
b) détermination de la position du dispositif de commande à distance (10)
c) détermination d'une distance réelle (20) entre la position du véhicule (2) et le dispositif de commande à distance (10)
d) comparaison de la distance réelle (20) avec au moins une distance de consigne (21) définie, la première fonction étant activée si la distance réelle (20) est inférieure ou égale à la distance de consigne (21),
l'étape suivante étant exécutée en tant que première fonction :
e) authentification sans contact du dispositif de commande à distance (10),
**caractérisé en ce que**
les étapes b), c), d) et e) sont exécutées de manière cyclique en fonction d'un paramètre d'état dépendant de la situation du dispositif de commande à distance (10).

2. Procédé de commande à distance (100) selon la revendication 1,
**caractérisé en ce que**
l'authentification sans contact du dispositif de commande à distance (10) s'effectue par le réseau de téléphonie mobile (4) et/ou une liaison Bluetooth (8) et/ou une liaison Bluetooth à faible puissance auprès du dispositif de sécurité (1) du véhicule (2).

3. Procédé de commande à distance (100) selon la revendication 1 ou 2,
**caractérisé en ce que**
à l'étape e), un code de sécurité est échangé entre le dispositif de commande à distance (10) et le dispositif de sécurité (1) du véhicule (2),
dans lequel, en particulier, le code de sécurité peut comprendre un code IMEI du dispositif de commande à distance (10), un code généré et/ou un code défini, en particulier pour une identification unique du dispositif de commande à distance (10) et/ou **en ce qu'**après une authentification réussie, un accès au véhicule (2) est libéré par le dispositif de sécurité (1).

4. Procédé de commande à distance (100) selon l'une quelconque des revendications précédentes,
**caractérisé en ce que**
l'étape a) et/ou b) et/ou c) et/ou d) est exécutée par le véhicule (2), en particulier une électronique de véhicule (2.2), la position du dispositif de commande à distance (10) étant reçue par un dispositif de communication (2.1) du véhicule (2), en particulier pour déterminer la distance réelle (20).

5. Procédé de commande à distance (100) selon l'une quelconque des revendications précédentes,
**caractérisé en ce qu'**
une première distance de consigne (21a) et au moins une deuxième distance de consigne (21b) sont définies, une première fonction étant activée à l'étape d) si la distance réelle (20) est inférieure ou égale à la première distance de consigne (21a), et au moins une deuxième fonction étant activée si la distance réelle (20) est inférieure ou égale à la deuxième distance de consigne (21b).

6. Procédé de commande à distance (100) selon l'une quelconque des revendications précédentes,
**caractérisé en ce que**
l'étape a) est effectuée à chaque arrêt du véhicule (2) et/ou
**en ce que** l'étape b) et/ou c) et/ou e) est exécutée en fonction de la distance réelle (20) en fonction du temps, en particulier de manière cyclique.

7. Procédé de commande à distance (100) selon l'une quelconque des revendications précédentes,
**caractérisé en ce que**
le dispositif de commande à distance (10) et/ou le véhicule (2) reçoivent leurs données de position sans contact,
les données de position provenant en particulier d'un système de navigation, d'un réseau de téléphonie mobile (4) par détermination des cellules de téléphonie mobile (4.2) et/ou d'un réseau et/ou
**en ce que** le dispositif de commande à distance (10) et/ou le véhicule (2) présente une deuxième unité radio (13) pour la réception des données de position et/ou pour l'authentification, une liaison avec un réseau GPS, WLAN, de téléphonie mobile et/ou Bluetooth pouvant notamment être exploitée par la deuxième unité radio (13).

8. Procédé de commande à distance (100) selon l'une quelconque des revendications précédentes,
**caractérisé en ce que**
le réseau de téléphonie mobile (4) est conçu selon un standard GSM, GPRS, UMTS et/ou LTE, et présente en particulier une liaison de données vers un Internet (5) et/ou un service de commutation (5.1) et/ou vers le véhicule (2).

9. Procédé de commande à distance (100) selon l'une quelconque des revendications précédentes,
**caractérisé en ce que**
le véhicule (2) présente un dispositif de communication (2.1), grâce auquel une liaison de données peut être exploitée avec le dispositif de commande à distance (10) et/ou
**en ce qu'**un dispositif de communication (2.1) du véhicule (2) est prévu pour l'exploitation d'une liaison de données avec le dispositif de commande à distance (10), un signal de détresse étant émis par l'intermédiaire du dispositif de communication (2.1), en particulier en cas d'accident du véhicule (2).

10. Dispositif de commande à distance (10), en particulier avec un appareil de radiocommunication mobile, et pour la commande à distance d'au moins une première fonction d'un dispositif de sécurité (1) d'un véhicule (2), comprenant
une première unité radio (12), grâce à laquelle une liaison avec un réseau de téléphonie mobile (4) peut être exploitée, et
une unité d'évaluation (10.1) qui est conçue pour faire fonctionner le dispositif de commande à distance (10) selon un procédé de commande à distance (100) selon l'une des revendications 1 à 9,
la position du véhicule (2) pouvant être reçue par la première unité radio (12) et la position du dispositif de commande à distance (10) ainsi qu'une distance réelle (20) entre la position du véhicule (2) et le dispositif de commande à distance (10) pouvant être déterminées par l'unité d'évaluation (10.1), et
la distance réelle (20) peut être comparée à au moins une distance de consigne (21) définie par l'unité d'évaluation (10.1), sachant que
la première fonction peut être activée si la distance réelle (20) est inférieure ou égale à la distance de consigne (21).

11. Dispositif de commande à distance (10) selon la revendication précédente,
**caractérisé en ce que**
la position du dispositif de commande à distance (10) peut être transmise au véhicule (2) par la première unité radio (12) et/ou
**en ce qu'**une unité d'affichage (10.3) est disposée sur le dispositif de commande à distance (10), la position du véhicule (2) pouvant être affichée sur l'unité d'affichage (10.3) pour localiser le véhicule (2) pour un opérateur.

12. Véhicule (2) comportant un dispositif de communication pour recevoir la position du dispositif de commande à distance (10) et une électronique de véhicule (2.2) pour mettre en oeuvre un procédé (100) selon l'une des revendications 1 à 9.

13. Système de commande à distance d'au moins une première fonction d'un dispositif de sécurité (1) d'un véhicule (2),
comprenant le dispositif de sécurité (1) et un dispositif de commande à distance (10) pour mettre en oeuvre un procédé de commande à distance (100) selon l'une quelconque des revendications 1 à 9,
le dispositif de commande à distance (10) présentant une première unité radio (12), grâce à laquelle une liaison avec un réseau de téléphonie mobile (4) peut être exploitée, la position du véhicule (2), la position du dispositif de commande à distance (10) ainsi qu'une distance réelle (20) entre la position du véhicule (2) et le dispositif de commande à distance (10) étant déterminées par une unité radio (12) peut être déterminée par une électronique de véhicule (2.2) et/ou par une unité d'évaluation (10.1) du dispositif de commande à distance (10), et
la distance réelle (20) peut être comparée à au moins une distance de consigne définie (21) par une électronique de véhicule (2.2) et/ou par une unité d'évaluation (10.1) du dispositif de commande à distance (10), dans lequel
la première fonction peut être activée si la distance réelle (20) est inférieure ou égale à la distance de consigne (21).

14. Système selon la revendication précédente,
**caractérisé en ce qu'**
il est prévu un dispositif de commande à distance (10) selon l'une des revendications 10 à 11.

15. Produit programme d'ordinateur (200) pour la commande à distance d'au moins une première fonction d'un dispositif de sécurité (1) d'un véhicule (2),
**caractérisé en ce que**
le produit programme d'ordinateur (200) est configuré pour mettre en oeuvre un procédé de commande à distance (100) selon l'une quelconque des revendications 1 à 9 lorsqu'il est chargé et exécuté par une unité de traitement.
